# EUROPÄISCHE PATENTSCHRIFT

(11) **EP 3 409 094 B1**
(45) Veröffentlichungstag und Bekanntmachung des Hinweises auf die Patenterteilung: **16.09.2020**
(21) Anmeldenummer: 18401054.4
(22) Anmeldetag: 24.05.2018
(51) Int. Cl.: A01C 17/00, A01C 21/00

(54) **VERFAHREN ZUM PLANEN UND/ODER AUSFÜHREN EINES DÜNGUNGSVORGANGS**
METHOD FOR PLANNING AND/OR EXECUTING A FERTILIZING PROCEDURE
PROCÉDÉ DE PLANIFICATION ET/OU DE MISE EN OEUVRE D'UN PROCESSUS D'APPORT D'ENGRAIS

(30) Priorität: 31.05.2017 DE 102017111889
(43) Veröffentlichungstag der Anmeldung: 05.12.2018
(60) Teilanmeldung: 20188043.2
(73) Patentinhaber: Amazonen-Werke H. Dreyer GmbH & Co. KG, 49205 Hasbergen (DE)
(72) Erfinder: Kielhorn, Arnd, 49090 Osnabrück (DE); Scheufler, Bernd, 49205 Hasbergen (DE)

(56) Entgegenhaltungen:
- EP-A1- 3 017 681
- WO-A1-01/45490
- DE-A1-102014 108 561

## Beschreibung

Die Erfindung betrifft ein Verfahren zum Planen und/oder Ausführen eines Düngungsvorgangs nach dem Oberbegriff des Patentanspruchs 1 und eine landwirtschaftliche Verteilmaschine nach dem Oberbegriff des Patentanspruchs 11.

Bei der Ausbringung von Dünger auf landwirtschaftliche Nutzflächen besteht regelmäßig die Notwendigkeit, eine Mehrzahl von unterschiedlichen Nährstoffen auszubringen. Zur Ausbringung unterschiedlicher Nährstoffe werden häufig Düngermischungen aus zumindest zwei Düngersorten eingesetzt.

Bei entsprechenden Düngermischungen weisen die unterschiedlichen Düngersorten häufig abweichende Wurf- und/oder Flugeigenschaften auf, sodass es unmittelbar nach dem Abwurf der Düngermischung zu einer Entmischung der Düngersorten kommt. Die Entmischung ist beispielsweise auf unterschiedliche Korngrößen und/oder -gewichte der Düngersorten zurückzuführen, woraus sich voneinander abweichende Beschleunigungswerte und Flugkurven ergeben.

Um diesem Problem zu begegnen, schlägt die Druckschrift DE 10 2014 108 561 A1 vor, mittels einer Bildauswertung die Verteilung von Düngerkörnern zu bestimmen, um den Grad der Entmischung bzw. den Veränderungsgrad der ursprünglich homogenen Mischung eines Mischdüngers nach dem Ausstreuen festzustellen. Die EP 3 017 681 A1 offenbart ein Verfahren und eine Verteilmaschine gemäß den Oberbegriffen der Ansprüche 1 und 11.

Obwohl die Erfassung einer Fehlapplikation bereits möglich ist, existiert noch keine praxistaugliche Lösung, mit welcher diese Problematik überwunden werden kann. Die Optimierung des Ausbringergebnisses durch die Verwendung von Düngermischungen, deren Düngersorten ähnliche Wurf- und/oder Flugeigenschaften aufweisen, ist nur begrenzt möglich und führt zu einer erheblichen Einschränkung bei der Auswahl geeigneter Düngersorten.

Die Aufgabe der vorliegenden Erfindung besteht somit darin, die homogene Ausbringung von zumindest zwei Nährstoffen im Rahmen eines Düngungsvorgangs zu vereinfachen.

Die Aufgabe wird gelöst durch ein Verfahren der eingangs genannten Art, wobei ein zweiter Ausbringvorgang zur Ausbringung eines Ausgleichsdüngers zum Reduzieren der erfassten Ungleichmäßigkeiten in der Nährstoffverteilung geplant und/oder ausgeführt wird und der Ausgleichsdünger zumindest den ersten Nährstoff umfasst und weder der ersten Düngersorte noch der zweiten Düngersorte der Düngermischung entspricht.

Die Erfindung macht sich die Erkenntnis zunutze, dass die während eines ersten Ausbringvorgangs erzeugten Ungleichmäßigkeiten in der Nährstoffverteilung durch einen zweiten Ausbringvorgang erheblich reduziert werden können, wenn die durch den ersten Ausbringvorgang erzeugten Ungleichmäßigkeiten in der Nährstoffverteilung vor dem zweiten Ausbringvorgang bekannt sind. Durch eine entsprechende Auswahl des Ausgleichsdüngers sowie durch eine geeignete Anpassung der Abwurfcharakteristik lässt sich durch den zweiten Ausbringvorgang die Gleichmäßigkeit in der Nährstoffverteilung erheblich steigern. Im Gegensatz zu den bekannten Ansätzen wird folglich nicht versucht, in einem ersten Ausbringvorgang eine Düngermischung auszubringen, deren Düngersorten eine möglichst geringe Entmischung aufweisen. Vielmehr wird die Fehlapplikation während des ersten Ausbringvorgangs toleriert und durch einen entsprechend angepassten zweiten Ausbringvorgang ausgeglichen. Somit werden Ertragsverluste durch Ungleichmäßigkeiten in der Nährstoffverteilung erheblich reduziert.

Vorzugsweise wird der zweite Ausbringvorgang vor dem Planen und/oder Ausführen des ersten Ausbringvorgangs geplant und/oder ausgeführt. Die Ungleichmäßigkeiten in der Nährstoffverteilung basieren vorzugsweise auf den unterschiedlichen Wurf- und/oder Flugeigenschaften der Düngersorten der Düngermischung. Das erfindungsgemäße Verfahren erlaubt ohne Weiteres die Ausbringung einer Düngermischung, welche eine pulvrige Düngersorte und eine grobkörnige Düngersorte umfasst. Der Ausgleichsdünger kann beispielsweise ein Einzelnährstoffdünger oder ein Mehrnährstoffdünger sein. Ferner kann der Ausgleichsdünger eine Düngermischung sein. Insbesondere kann der Ausgleichsdünger die Düngermischung sein, dessen Ausbringung im Rahmen des ersten Ausbringvorgangs geplant und/oder ausgeführt wurde.

In einer bevorzugten Ausführungsform des erfindungsgemäßen Verfahrens umfasst das Planen und/oder Ausführen des ersten Ausbringvorgangs das Eingeben oder Auswählen einer Düngermischung und/oder das Eingeben oder Auswählen der zumindest zwei Düngersorten der Düngermischung. Das Eingeben oder Auswählen der Düngermischung und/oder der zumindest zwei Düngersorten der Düngermischung kann an der landwirtschaftlichen Verteilmaschine, der Zug- oder Trägermaschine der landwirtschaftlichen Verteilmaschine oder von einem externen Gerät, wie beispielsweise einem mobilen Endgerät, erfolgen. Vorzugsweise sind die Wurf- und/oder Flugeigenschaften von mehreren Düngermischungen und/oder Düngersorten auf einem Speicher hinterlegt, sodass durch die Eingabe oder die Auswahl der Düngermischung und/oder der zumindest zwei Düngersorten der Düngermischung ein Abwurfbild berechnet werden kann, aus welchem Ungleichmäßigkeiten in der Nährstoffverteilung zumindest eines ersten Nährstoffs der Düngermischung abgeleitet werden können.

In einer anderen Ausführungsform des erfindungsgemäßen Verfahrens umfasst das Erfassen von Ungleichmäßigkeiten in der Nährstoffverteilung zumindest des ersten Nährstoffs der Düngermischung entsprechend des geplanten und/oder ausgeführten ersten Ausbringvorgangs das Anordnen von einem oder mehreren Auffangbehältern auf einer Probefläche, das Ausführen einer Probeausbringung der Düngermischung auf der Probefläche und/oder das Auswerten des Inhalts des einen oder der mehreren Auffangbehälter nach dem Ausführen der Probeausbringung. Insbesondere, wenn die Wurf- und/oder Flugeigenschaften der Düngermischung oder der zumindest zwei Düngersorten der Düngermischung nicht bekannt sind oder aufgrund von äußeren Einflüssen, wie beispielsweise Feuchtigkeit, mit einer Abweichung von bekannten Wurf- und/oder Flugeigenschaften zu rechnen ist, erlaubt die Probeausbringung der Düngermischung das Erfassen von Ungleichmäßigkeiten in der Nährstoffverteilung, welche letztendlich auf die unterschiedlichen Wurf- und/oder Flugeigenschaften der zumindest zwei Düngersorten der Düngermischung zurückgehen. Durch die Anzahl und die Beabstandung der eingesetzten Auffangbehälter auf der Probefläche kann die Genauigkeit der Erfassung der Ungleichmäßigkeiten durch Auswerten des Inhalts der Auffangbehälter nach dem Ausführen der Probeausbringung eingestellt werden. Die Genauigkeit der Erfassung von Ungleichmäßigkeiten in der Nährstoffverteilung steigt mit zunehmender Anzahl von ausgewerteten Auffangbehältern sowie mit abnehmendem Abstand benachbarter Auffangbehälter auf der Probefläche an.

In einer Weiterbildung des erfindungsgemäßen Verfahrens umfasst das Erfassen von Ungleichmäßigkeiten in der Nährstoffverteilung zumindest des ersten Nährstoffs der Düngermischung entsprechend des ausgeführten ersten Ausbringvorgangs das Ausführen einer spektralen Analyse des Pflanzenbestands vor oder während dem Planen und/oder Ausführen des zweiten Ausbringvorgangs. Die Reflexions-Eigenschaften von Pflanzenbeständen werden unter anderem von ihrem Nährstoff-Ernährungszustand beeinflusst. Beispielsweise wird während der spektralen Analyse des Pflanzenbestands das von den Pflanzen reflektierte Sonnenlicht erfasst. Über den Vergleich mit dem direkt einfallenden Sonnenlicht kann die Analyse bei unterschiedlichen und/oder wechselnden Lichtverhältnissen ausgeführt werden. Die durch die Lichtmessung erzeugten Daten können dann an ein Spektrometer übermittelt werden, welches eine spektrale Zerlegung vornimmt und die Daten entsprechend analysiert. Beispielsweise kann somit der Stickstoff-Ernährungszustand von Pflanzenbeständen erfasst und/oder überwacht werden. Werden Ungleichmäßigkeiten in dem Ernährungszustand eines Pflanzenbestands festgestellt, ist dies regelmäßig auf Ungleichmäßigkeiten in der Nährstoffverteilung zurückzuführen. In diesem Fall kann eine Ausgleichsdüngung zum Reduzieren der Ungleichmäßigkeiten in der Nährstoffverteilung ausgeführt und/oder geplant werden.

Außerdem ist ein erfindungsgemäßes Verfahren bevorzugt, bei welchem das Erfassen von Ungleichmäßigkeiten in der Nährstoffverteilung zumindest des ersten Nährstoffs der Düngermischung entsprechend des geplanten und/oder ausgeführten ersten Ausbringvorgangs das Bereitstellen von Streuparametern, welche den Düngerauswurf beeinflussen, für eine Auswerteeinrichtung, das Bereitstellen von Wurf- und/oder Flugeigenschaften der Düngermischung für eine Auswerteeinrichtung und/oder das Bereitstellen von Wurf- und/oder Flugeigenschaften der zumindest zwei Düngersorten für eine Auswerteeinrichtung. Die Streuparameter der Verteilmaschine, welche den Düngerauswurf beeinflussen, umfassen beispielsweise die Rotationsgeschwindigkeit der Wurfscheibe, die Ausrichtung oder Anordnung von Wurfschaufeln, den Aufgabepunkt des Düngers auf die Wurfscheibe oder die Düngermenge. Die Wurf- und/oder Flugeigenschaften der Düngermischung und/oder der zumindest zwei Düngersorten können deren Struktur, deren Korngewicht, deren Kornform und/oder deren Korndichte umfassen. Die Wurf- und/oder Flugeigenschaften der Düngermischung und/oder der zumindest zwei Düngersorten können deren Mengenverteilung bei vorgegebenen Streuparametern umfassen.

In einer vorteilhaften Weiterbildung des erfindungsgemäßen Verfahrens umfasst das Erfassen von Ungleichmäßigkeiten in der Nährstoffverteilung zumindest des ersten Nährstoffs der Düngermischung entsprechend des geplanten und/oder ausgeführten ersten Ausbringvorgangs das Berechnen der Ungleichmäßigkeiten in der Nährstoffverteilung zumindest des ersten Nährstoffs der Düngermischung unter Berücksichtigung der bereitgestellten Streuparameter, der bereitgestellten Wurf- und/oder Flugeigenschaften der Düngermischung und/oder der bereitgestellten Wurf- und/oder Flugeigenschaften der zumindest zwei Düngersorten durch die Auswerteeinrichtung. Beispielsweise erfolgt die Berechnung von Ungleichmäßigkeiten in der Nährstoffverteilung zumindest des ersten Nährstoffs der Düngermischung auf Basis von einer oder mehreren Berechnungsformeln.

In einer weiteren Ausführungsform des erfindungsgemäßen Verfahrens umfasst das Planen und/oder Ausführen des zweiten Ausbringvorgangs das Anzeigen der Nährstoffverteilung zumindest des ersten Nährstoffs der Düngermischung entsprechend des geplanten und/oder ausgeführten ersten Ausbringvorgangs. Das Anzeigen der Nährstoffverteilung zumindest des ersten Nährstoffs der Düngermischung kann beispielsweise mittels eines Displays oder Touchscreens erfolgen, wobei der Display oder Touchscreen Bestandteil der landwirtschaftlichen Verteilmaschine, Bestandteil einer die landwirtschaftliche Verteilmaschine ziehenden oder tragenden Maschine oder Bestandteil eines externen Geräts, beispielsweise eines mobilen Endgeräts, sein kann. Die Nährstoffverteilung zumindest des ersten Nährstoffs der Düngermischung kann dabei beispielsweise in Listenform oder nach Art einer topografischen Karte angezeigt werden. Alternativ oder zusätzlich umfasst das Planen und/oder Ausführen des zweiten Ausbringvorgangs das Anzeigen eines Fahrgassenvorschlags für den zweiten Ausbringvorgang. Durch den Fahrgassenvorschlag kann eine versetzte Fahrgasse zum Ausgleich der Ungleichmäßigkeiten genutzt werden. Dies ist insbesondere dann vorteilhaft, wenn der Ausgleichsdünger der zuvor ausgebrachten Düngermischung entspricht. Alternativ oder zusätzlich umfasst das Planen und/oder Ausführen des zweiten Ausbringvorgangs das Anzeigen eines Einstellungsvorschlags für die Streuparameter der Verteilmaschine für den zweiten Ausbringvorgang. Die Einstellung der Streuparameter dient zur Anpassung der Querverteilung und somit zum Ausgleich der beim ersten Ausbringvorgang tolerierten Fehlapplikation der Düngermischung. Der Einstellungsvorschlag für die Streuparameter der Verteilmaschine kann beispielsweise einen Vorschlag für die Rotationsgeschwindigkeit der Streuscheibe und/oder einen Vorschlag für die Ausrichtung von einer oder mehreren auf der Streuscheibe angeordneten Wurfschaufeln umfassen.

Bevorzugt ist außerdem ein erfindungsgemäßes Verfahren, bei welchem das Ausführen des zweiten Ausbringvorgangs das Erzeugen eines Steuerungssignals zur Anpassung von Streuparametern der Verteilmaschine auf Grundlage der erfassten Ungleichmäßigkeiten in der Nährstoffverteilung, das selbsttätige Anpassen von Streuparametern der Verteilmaschine auf Grundlage des erzeugten Steuerungssignals und/oder das selbsttätige Steuern der Verteilmaschine oder einer die Verteilmaschine tragenden oder ziehenden Maschine zur Einhaltung einer zum Reduzieren der erfassten Ungleichmäßigkeiten geeigneten Fahrgasse, umfasst. Durch das selbsttätige Anpassen von Streuparametern der Verteilmaschine und/oder das selbsttätige Steuern der Verteilmaschine oder der die Verteilmaschine tragenden oder ziehenden Maschine wird der Komfort beim Ausführen des Düngungsvorgangs weiter gesteigert, da die notwendigen Eingriffe eines Maschinenbedieners reduziert werden. Ferner können die erfassten Ungleichmäßigkeiten durch die Ausbringung des Ausgleichsdüngers auf diese Weise in einem noch höheren Maße ausgeglichen werden, da Fehleinstellungen der Streuparameter der Verteilmaschine durch einen Maschinenbediener und/oder Steuerungsfehler eines Maschinenbedieners ausgeschlossen werden.

Das erfindungsgemäße Verfahren wird ferner dadurch vorteilhaft weitergebildet, dass das Anpassen von Streuparametern der Verteilmaschine das Einstellen einer geeigneten Rotationsgeschwindigkeit der Wurfscheibe zum Reduzieren der erfassten Ungleichmäßigkeiten in der Nährstoffverteilung und/oder das Einstellen einer geeigneten Anordnung und/oder Ausrichtung von einer oder mehreren an der Wurfscheibe angeordneten Wurfschaufeln zum Reduzieren der erfassten Ungleichmäßigkeiten in der Nährstoffverteilung umfasst. Durch eine Steigerung der Rotationsgeschwindigkeit der Wurfscheibe kann beispielsweise die Abwurfweite erhöht werden. Durch eine Reduzierung der Rotationsgeschwindigkeit der Wurfscheibe kann beispielsweise die Abwurfweite verkleinert werden. Durch das Einstellen der Anordnung und/oder Ausrichtung von einer oder mehreren Wurfschaufeln kann die Mengenverteilung über die Abwurfweite angepasst werden. Üblicherweise verringert sich die applizierte Düngermenge mit zunehmendem Abstand von der landwirtschaftlichen Verteilmaschine, sodass die Mengenverteilung in Querrichtung einer Dreiecksform entspricht. Insbesondere über die Einstellung der Anordnung und/oder Ausrichtung von Wurfschaufeln lassen sich auch andere Querverteilungscharakteristiken umsetzen. Alternativ oder zusätzlich umfasst das Anpassen von Streuparametern der Verteilmaschine das Einstellen eines geeigneten Aufgabepunkts des Ausgleichsdüngers auf die Wurfscheibe zum Reduzieren der erfassten Ungleichmäßigkeiten in der Nährstoffverteilung und/oder das Einstellen einer geeigneten Menge an Ausgleichsdünger zum Reduzieren der erfassten Ungleichmäßigkeiten in der Nährstoffverteilung. Durch das Einstellen eines geeigneten Aufgabepunkts des Ausgleichsdüngers auf die Wurfscheibe kann ebenfalls die Abwurfcharakteristik beeinflusst werden. Das Einstellen einer geeigneten Menge an Ausgleichsdünger zum Reduzieren der erfassten Ungleichmäßigkeiten in der Nährstoffverteilung erfolgt vorzugsweise über eine selbsttätige Steuerung einer Dosiereinrichtung der landwirtschaftlichen Verteilmaschine.

In einer bevorzugten Weiterbildung des erfindungsgemäßen Verfahrens wird beim Ausführen des ersten Ausbringvorgangs bereits berücksichtigt, dass der zweite Ausbringvorgang zum Reduzieren von Ungleichmäßigkeiten in der Nährstoffverteilung notwendig sein wird. Dies bedeutet, dass die Streuparameter der Verteilmaschine bereits für den ersten Ausbringvorgang derart angepasst werden können, dass eine maximale Reduzierung der Ungleichmäßigkeiten im zweiten Ausbringvorgang erfolgen kann. Die Zusammensetzung der Düngermischung kann bereits für den ersten Ausbringvorgang derart angepasst werden, dass eine maximale Reduzierung der Ungleichmäßigkeiten im zweiten Ausbringvorgang erfolgen kann. Ferner kann auch der Maschinenbediener informiert werden, dass die Ausbringung einer ausgewählten Düngermischung in dem ersten Ausbringvorgang nachteilig ist, beispielsweise da die Wurf- und/oder Flugeigenschaften der Düngersorten zu unterschiedlich sind und die Ungleichmäßigkeiten in einem zweiten Ausbringvorgang nicht ausreichend ausgeglichen werden können.

Die der Erfindung zugrunde liegende Aufgabe wird ferner durch eine landwirtschaftliche Verteilmaschine der eingangs genannten Art gelöst, wobei die landwirtschaftliche Verteilmaschine dazu eingerichtet ist, das Verfahren zum Planen und/oder Ausführen eines Düngungsvorgangs nach einer der vorstehend beschriebenen Ausführungsformen auszuführen. Hinsichtlich der Vorteile und Modifikationen der erfindungsgemäßen landwirtschaftlichen Verteilmaschine wird zunächst auf die Vorteile und Modifikationen des erfindungsgemäßen Verfahrens verwiesen. Weiter weist die erfindungsgemäße landwirtschaftliche Verteilmaschine eine Ausgabevorrichtung auf, welche dazu eingerichtet ist, einen Einstellungsvorschlag für die Streuparameter für den zweiten Ausbringvorgang auszugeben, insbesondere anzuzeigen.

In einer bevorzugten Ausführungsform ist die Ausgabevorrichtung zusätzlich dazu eingerichtet, die Nährstoffverteilung zumindest des ersten Nährstoffs der Düngermischung entsprechend des geplanten und/oder ausgeführten ersten Ausbringvorgangs auszugeben, insbesondere anzuzeigen, und/oder einen Fahrgassenvorschlag für den zweiten Ausbringvorgang auszugeben, insbesondere anzuzeigen. Insbesondere ist die Ausgabevorrichtung als Display oder Touchscreen ausgebildet. Die Ausgabevorrichtung kann beispielsweise ein Bestandteil eines mobilen Endgeräts sein, sodass dem Maschinenbediener die Nährstoffverteilung zumindest des ersten Nährstoffs, der Fahrgassenvorschlag für den zweiten Ausbringvorgang und/oder der Einstellungsvorschlag für die Streuparameter für den zweiten Ausbringvorgang im Führerhaus einer die landwirtschaftliche Verteilmaschine ziehenden oder tragenden Maschine angezeigt werden können. Alternativ kann durch die Anzeige der Nährstoffverteilung zumindest des ersten Nährstoffs, des Fahrgassenvorschlags für den zweiten Ausbringvorgang und/oder des Einstellungsvorschlags für die Streuparameter für den zweiten Ausbringvorgang auf einem mobilen Endgerät der zweite Ausbringvorgang entfernt von der landwirtschaftlichen Verteilmaschine, beispielsweise in der Betriebsstätte eines Landwirts, geplant werden.

In einer anderen bevorzugten Ausführungsform der landwirtschaftlichen Verteilmaschine ist die Auswerteeinrichtung dazu eingerichtet, ein Steuersignal zur Anpassung von Streuparametern der landwirtschaftlichen Verteilmaschine auf Grundlage der erfassten Ungleichmäßigkeiten in der Nährstoffverteilung zumindest des ersten Nährstoffs der Düngermischung zu erzeugen. Hierzu kann die Auswerteeinrichtung dazu eingerichtet, auf Basis der erfassten Ungleichmäßigkeiten in der Nährstoffverteilung zumindest des ersten Nährstoffs der Düngermischung und den Wurf- und/oder Flugeigenschaften des Ausgleichsdüngers eine für den zweiten Ausbringvorgang geeignete Rotationsgeschwindigkeit der Wurfscheibe, eine für den zweiten Ausbringvorgang geeignete Ausrichtung oder Anordnung von Wurfschaufeln, einen für den zweiten Ausbringvorgang geeigneten Aufgabepunkt des Düngers auf die Wurfscheibe und/oder eine für den zweiten Ausbringvorgang geeignete Düngermenge zu bestimmen.

Außerdem ist eine landwirtschaftliche Verteilmaschine bevorzugt, welche eine Steuerungseinrichtung aufweist, welche dazu eingerichtet ist, Streuparameter der landwirtschaftlichen Verteilmaschine auf Grundlage des erzeugten Steuerungssignals selbsttätig anzupassen und/oder die Verteilmaschine oder eine die Verteilmaschine ziehende oder tragende Maschine zur Einhaltung einer zum Reduzieren der erfassten Ungleichmäßigkeiten in der Nährstoffverteilung geeigneten Fahrgasse selbsttätig zu steuern.

Weitere Einzelheiten der Erfindung sind der Figurenbeschreibung und den Zeichnungen zu entnehmen. Es zeigen
- Fig. 1: eine erfindungsgemäße landwirtschaftliche Verteilmaschine während des Ausführens eines ersten Ausbringvorgangs zur Ausbringung einer Düngermischung in einer schematischen Darstellung;
- Fig. 2: die landwirtschaftliche Verteilmaschine aus der Fig. 1 während des Ausführens eines zweiten Ausbringvorgangs zur Ausbringung eines Ausgleichsdüngers in einer schematischen Darstellung;
- Fig. 3: eine erfindungsgemäße landwirtschaftliche Verteilmaschine während des Ausführens eines ersten Ausbringvorgangs zur Ausbringung einer Düngermischung in einer schematischen Darstellung; und
- Fig. 4: die landwirtschaftliche Verteilmaschine aus der Fig. 3 während des Ausführens eines zweiten Ausbringvorgangs zur Ausbringung eines Ausgleichsdüngers in einer schematischen Darstellung.

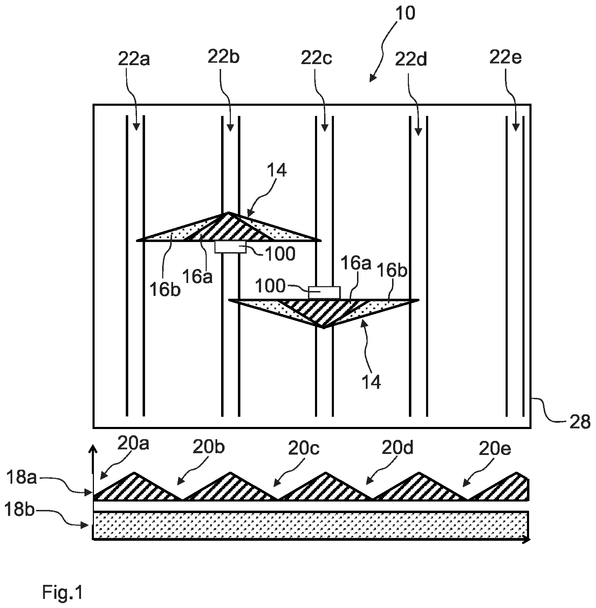

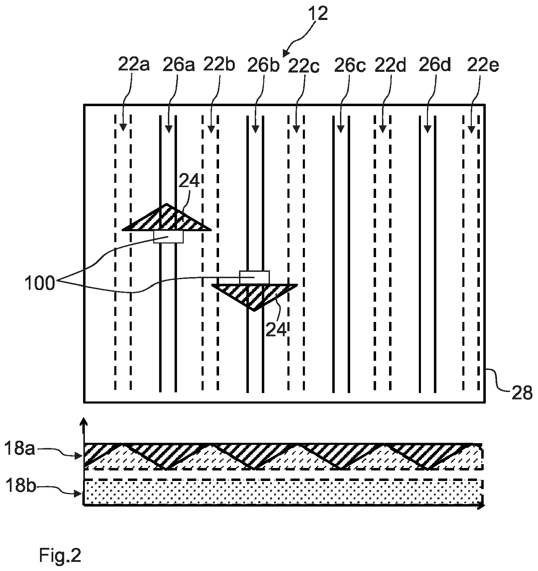

Die Fig. 1 und die Fig. 2 zeigen eine landwirtschaftliche Verteilmaschine 100 beim Ausführen eines Düngungsvorgangs auf einem Feld 28.

In der Fig. 1 führt die landwirtschaftliche Verteilmaschine 100 einen ersten Ausbringvorgang 10 zur Ausbringung einer Düngermischung 14 aus. Die Düngermischung 14 umfasst zwei Düngersorten 16a, 16b. Die erste Düngersorte 16a umfasst einen ersten Nährstoff und die zweite Düngersorte 16b umfasst einen zweiten Nährstoff, wobei sich der erste Nährstoff der ersten Düngersorte 16a von dem zweiten Nährstoff der zweiten Düngersorte 16b unterscheidet. Folglich werden durch die Düngermischung 14 zwei unterschiedliche Nährstoffe ausgebracht.

Die Körner der Düngersorte 16a sind im Vergleich zu den Körnern der Düngersorte 16b kleiner und leichter, sodass die Düngersorten 16a, 16b unterschiedliche Wurf- und Flugeigenschaften aufweisen. Bei dem ersten Ausbringvorgang 10 sind die den Düngerauswurf beeinflussenden Streuparameter der Verteilmaschine 100 derart eingestellt, dass die Nährstoffverteilung 18a des ersten Nährstoffs Ungleichmäßigkeiten 20a-20e und die Nährstoffverteilung 18b des zweiten Nährstoffs keine Ungleichmäßigkeiten aufweist. Die Streuparameter der Verteilmaschine 100, welche den Düngerauswurf beeinflussen, sind beispielsweise die Rotationsgeschwindigkeit der Wurfscheibe, die Ausrichtung der auf der Wurfscheibe angeordneten Wurfschaufeln, der Aufgabepunkt des Düngers auf die Wurfscheibe und die Düngermenge.

Die ausgebrachte Menge des ersten Nährstoffs nimmt entsprechend der ausgebrachten Menge der ersten Düngersorte 16a mit zunehmendem Abstand von der jeweiligen Fahrgasse 22a-22e kontinuierlich bis auf null ab. Die erste Düngersorte 16a wird jedoch nicht ausreichend weit ausgeworfen, sodass sich beim Abfahren der Fahrgassen 22a-22e eine ungleichmäßige Verteilung des ersten Düngers 18a und somit auch des ersten Nährstoffs ergibt.

Die ausgebrachte Menge des zweiten Nährstoffs nimmt entsprechend der ausgebrachten Menge der zweiten Düngersorte 16b mit zunehmendem Abstand von der jeweiligen Fahrgasse 22a-22e bis zur jeweils benachbarten Fahrgasse 22a-22e kontinuierlich bis auf null ab. Beim Abfahren der Fahrgassen 22a-22e ergibt sich somit eine gleichmäßige Verteilung des zweiten Düngers 18b und somit auch des zweiten Nährstoffs.

Die Ungleichmäßigkeiten 20a-20e in der Nährstoffverteilung 18a des ersten Nährstoffs führen letztendlich zu einem Ertragsverlust, sodass diese Ungleichmäßigkeiten 20a-20e auszugleichen sind.

Hierzu weist die landwirtschaftliche Verteilmaschine 100 eine Auswerteeinrichtung und eine Steuerungseinrichtung auf.

Die Auswerteeinrichtung der landwirtschaftlichen Verteilmaschine 100 ist dazu eingerichtet, Ungleichmäßigkeiten 20a-20e in der Nährstoffverteilung 18a, 18b der ausgebrachten Nährstoffe der Düngermischung 14 zu erfassen und ein Steuerungssignal zur Anpassung der Streuparametern der landwirtschaftlichen Verteilmaschine 100 auf Grundlage der erfassten Ungleichmäßigkeiten 20a-20e in der Nährstoffverteilung 18a, 18b der ausgebrachten Nährstoffe der Düngermischung 14 zu erzeugen.

Die Steuerungseinrichtung ist dazu eingerichtet, die Streuparameter der landwirtschaftlichen Verteilmaschine 100 auf Grundlage des erzeugten Steuerungssignals selbsttätig anzupassen und die Verteilmaschine 100 zur Einhaltung einer zum Reduzieren der erfassten Ungleichmäßigkeiten 20a-20e in der Nährstoffverteilung 18a, 18b der ausgebrachten Nährstoffe der Düngermischung 14 geeigneten Fahrgasse 22a-22e, 26a-26d selbsttätig zu steuern.

Vorliegend hat die Auswerteeinrichtung der landwirtschaftlichen Verteilmaschine 100 Ungleichmäßigkeiten 20a-20e in der Nährstoffverteilung 18a des ersten Nährstoffs der Düngermischung 14 erfasst. Zum Erfassen der Ungleichmäßigkeiten 20a-20e in der Nährstoffverteilung 18a des ersten Nährstoffs der Düngermischung 14 wurden nach der Anpassung der Streuparameter auf die Wurf- und Flugeigenschaften der zweiten Düngersorte 16b der Düngermischung 14 mehrere Auffangbehältern auf einer Probefläche aufgestellt und eine Probeausbringung der Düngermischung 14 auf der Probefläche ausgeführt. Anschließend wurde der Inhalt der Auffangbehälter mittels der Auswerteeinrichtung ausgewertet, beispielsweise mittels einer Bildauswertungsroutine. Aus der Verteilung der ersten Düngersorte 16a und der zweiten Düngersorte 16b in den Auffangbehältern wurden die Nährstoffverteilungen 18a, 18b des ersten Nährstoffs und des zweiten Nährstoffs der Düngermischung 14 erfasst.

Optional können dem Maschinenbediener die erfassten Nährstoffverteilungen 18a, 18b über eine Ausgabevorrichtung graphisch angezeigt werden.

Die Fig. 2 zeigt die landwirtschaftliche Verteilmaschine 100 beim Ausführen eines zweiten Ausbringvorgangs 12 zur Ausbringung eines Ausgleichsdüngers 24. Der Ausgleichsdünger entspricht der ersten Düngersorte 16a der während des ersten Ausbringvorgangs ausgebrachten Düngermischung 14. Der zweite Ausbringvorgang 12 wird ausgeführt, um die erfassten Ungleichmäßigkeiten 20a-20e in der Nährstoffverteilung 18a zu reduzieren.

Vor dem Ausführen des zweiten Ausbringvorgangs 12 wurde geprüft, ob die Streuparameter der Verteilmaschine 100 für den zweiten Ausbringvorgang 12 anzupassen sind. Die Auswertung der erfassten Ungleichmäßigkeiten 20a-20e ergab jedoch, dass ein Ausgleich ohne Anpassung der Streuparameter der landwirtschaftlichen Verteilmaschine 100, sondern durch Ausbringen des Ausgleichdüngers 24 von versetzten Fahrgassen 26a-26d aus erfolgen kann. Entsprechend wird die landwirtschaftliche Verteilmaschine 100 in der Fig. 2 derart selbsttätig gesteuert, dass die zum Reduzieren der erfassten Ungleichmäßigkeiten 20a-20e geeigneten Fahrgassen 26a-26d eingehalten werden.

Der Ausgleich der Ungleichmäßigkeiten 20a-20e in der Nährstoffverteilung 18a konnte in einem besonders hohen Maße erfolgen, da beim Ausführen des ersten Ausbringvorgangs 10 bereits berücksichtigt wurde, dass der zweite Ausbringvorgang 12 zum Reduzieren von Ungleichmäßigkeiten 20a-20e in der Nährstoffverteilung 18a notwendig sein wird. Demnach wurden die Streuparameter der landwirtschaftlichen Verteilmaschine 100 bereits für den ersten Ausbringvorgang 10 derart angepasst, dass eine maximale Reduzierung der Ungleichmäßigkeiten 20a-20e im zweiten Ausbringvorgang 12 erfolgen kann.

Alternativ zu der selbsttätigen Steuerung der landwirtschaftlichen Verteilmaschine, hätten dem Maschinenbediener auch ein Fahrgassenvorschlag für den zweiten Ausbringvorgang 12 und ein Einstellungsvorschlag für die Streuparameter für den zweiten Ausbringvorgang 12 angezeigt werden können.

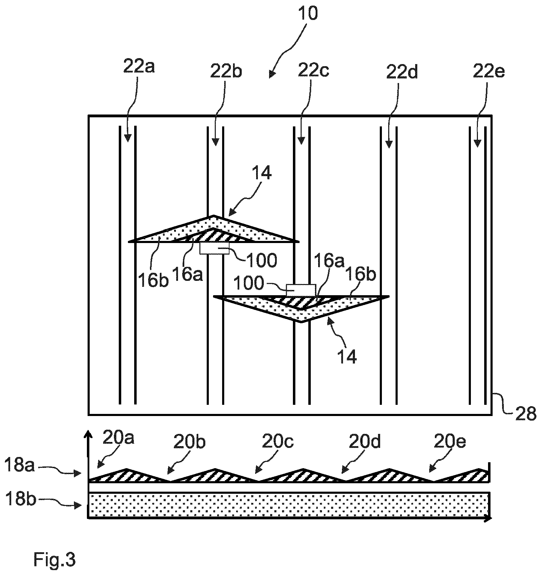

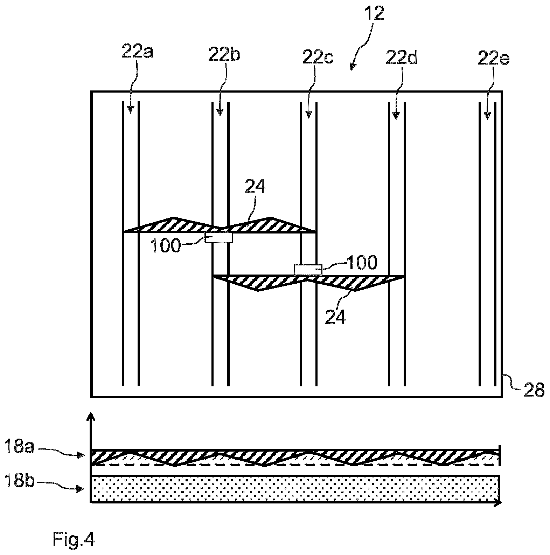

Die Fig. 3 und die Fig. 4 zeigen ebenfalls eine landwirtschaftliche Verteilmaschine 100 beim Ausführen eines Düngungsvorgangs auf einem Feld 28.

In der Fig. 3 führt die landwirtschaftliche Verteilmaschine 100 analog zu der in der Fig. 1 dargestellten landwirtschaftlichen Verteilmaschine 100 einen ersten Ausbringvorgang 10 zur Ausbringung einer Düngermischung 14 aus, wobei sich die Querverteilung der ersten Düngersorte 16a und somit auch die Querverteilung des ausgebrachten ersten Nährstoffs von der in der Fig. 1 dargestellten Querverteilung des ersten Nährstoffs unterscheidet.

In dem dargestellten Ausführungsbeispiel hat der Maschinenbediener vor dem Ausführen des ersten Ausbringvorgangs die auszubringende Düngermischung 14 über eine Eingabeeinrichtung ausgewählt. Die Auswerteeinrichtung der landwirtschaftlichen Verteilmaschine hat dann die Wurf- und Flugeigenschaften der Düngersorten 16a, 16b der ausgewählten Düngermischung 14 von einem Speicher abgerufen, um geeignete Streuparameter zur gleichmäßigen Ausbringung des zweiten Nährstoffs der zweiten Düngersorte 16b zu ermitteln. Unter Berücksichtigung der Wurf- und Flugeigenschaften der ersten Düngersorte 16a und unter Berücksichtigung der ermittelten Streuparameter der landwirtschaftlichen Verteilmaschine 100 wurden dann die sich ergebenden Ungleichmäßigkeiten 20a-20e in der Nährstoffverteilung 18a des ersten Nährstoffs berechnet.

Die Fig. 4 zeigt die landwirtschaftliche Verteilmaschine 100 beim Ausführen eines zweiten Ausbringvorgangs 12 zur Ausbringung eines Ausgleichsdüngers 24. Der Ausgleichsdünger entspricht weder der ersten Düngersorte 16a noch der zweiten Düngersorte 16b der während des ersten Ausbringvorgangs 10 ausgebrachten Düngermischung 14. Vielmehr handelt es sich bei dem Ausgleichsdünger 24 um eine andere Düngersorte, welche jedoch auch den ersten Nährstoff beinhaltet, welcher auch Bestandteil der ersten Düngersorte 16a der während des ersten Ausbringvorgangs 10 ausgebrachten Düngermischung 14 war. Der zweite Ausbringvorgang 12 wird ausgeführt, um die erfassten Ungleichmäßigkeiten 20a-20e in der Nährstoffverteilung 18a des ersten Nährstoffs zu reduzieren.

Die landwirtschaftliche Verteilmaschine 100 benutzt nunmehr die gleichen Fahrgassen 22a-22e wie während des ersten Ausbringvorgangs 10. Jedoch wurden die Streuparameter der Verteilmaschine 100 derart angepasst, dass sich eine gänzlich andere Querverteilung des Ausgleichsdüngers 24 ergibt. Damit die berechneten Ungleichmäßigkeiten 20a-20e in der Nährstoffverteilung 18a des ersten Nährstoffs in dem zweiten Ausbringvorgang 12 ausgeglichen werden können, wurde die Rotationsgeschwindigkeit der Wurfscheibe, die Ausrichtung von zwei an der Wurfscheibe angeordneten Wurfschaufeln, der Aufgabepunkt des Ausgleichdüngers auf die Wurfscheibe und die auf die Wurfscheibe aufgegebene Menge an Ausgleichsdünger 24 zum Reduzieren der Ungleichmäßigkeiten 20a-20e in der Nährstoffverteilung 18a des ersten Nährstoffs entsprechend angepasst.

Die landwirtschaftliche Verteilmaschine 100 kann zusätzlich dazu eingerichtet sein, eine spektrale Analyse des Pflanzenbestands vor oder während dem Ausführen des zweiten Ausbringvorgangs 12 durchzuführen. Da die Reflexions-Eigenschaften von Pflanzenbeständen von dem Nährstoff-Ernährungszustand beeinflusst werden, können beispielsweise über die Auswertung von Lichtmessungen Ungleichmäßigkeiten in der Nährstoffverteilung erfasst und bei der Ausbringung des Ausgleichsdüngers berücksichtigt werden.

### Bezugszeichenliste

- 10: erster Ausbringvorgang
- 12: zweiter Ausbringvorgang
- 14: Düngermischung
- 16a, 16b: Düngersorten
- 18a, 18b: Nährstoffverteilungen
- 20a-20e: Ungleichmäßigkeiten
- 22a-22e: Fahrgassen
- 24: Ausgleichsdünger
- 26a-26d: Fahrgassen
- 28: Feld

- 100: landwirtschaftliche Verteilmaschine

## Patentansprüche

1. Verfahren zum Planen und/oder Ausführen eines Düngungsvorgangs, mit den Schritten:
- Planen und/oder Ausführen eines ersten Ausbringvorgangs (10) zur Ausbringung einer Düngermischung (14) mit einer ersten Düngersorte (16a) und einer zweiten Düngersorte (16b), wobei die Düngermischung (14) zumindest zwei Nährstoffe umfasst; und
- Erfassen von Ungleichmäßigkeiten (20a-20e) in der Nährstoffverteilung (18a, 18b) zumindest eines ersten Nährstoffs der Düngermischung (14) entsprechend des geplanten und/oder ausgeführten ersten Ausbringvorgangs (10) durch eine Auswerteeinrichtung;
**gekennzeichnet durch** den Schritt:
- Planen und/oder Ausführen eines zweiten Ausbringvorgangs (12) zur Ausbringung eines Ausgleichsdüngers (24) zum Reduzieren der erfassten Ungleichmäßigkeiten (20a-20e) in der Nährstoffverteilung (18a, 18b), wobei der Ausgleichsdünger (24) zumindest den ersten Nährstoff umfasst und weder der ersten Düngersorte (16a) noch der zweiten Düngersorte (16b) der Düngermischung (14) entspricht.

2. Verfahren nach Anspruch 1,
**dadurch gekennzeichnet, dass** das Planen und/oder Ausführen des ersten Ausbringvorgangs (10) zumindest einen der folgenden Schritte umfasst:
- Eingeben oder Auswählen einer Düngermischung (14) an einer landwirtschaftlichen Verteilmaschine, einer Zug- oder Trägermaschine der landwirtschaftlichen Verteilmaschine oder von einem externen Gerät;
- Eingeben oder Auswählen der ersten Düngersorte (16a) und der zweiten Düngersorte (16b) der Düngermischung (14) an einer landwirtschaftlichen Verteilmaschine, einer Zug- oder Trägermaschine der landwirtschaftlichen Verteilmaschine oder von einem externen Gerät.

3. Verfahren nach Anspruch 1 oder 2,
**dadurch gekennzeichnet, dass** das Erfassen von Ungleichmäßigkeiten (20a-20e) in der Nährstoffverteilung (18a, 18b) zumindest des ersten Nährstoffs der Düngermischung (14) entsprechend des geplanten und/oder ausgeführten ersten Ausbringvorgangs (10) zumindest einen der folgenden Schritte umfasst:
- Anordnen von einem oder mehreren Auffangbehältern auf einer Probefläche;
- Ausführen einer Probeausbringung der Düngermischung (14) auf der Probefläche;
- Auswerten des Inhalts des einen oder der mehreren Auffangbehälter nach dem Ausführen der Probeausbringung.

4. Verfahren nach einem der vorstehenden Ansprüche,
**dadurch gekennzeichnet, dass** das Erfassen von Ungleichmäßigkeiten (20a-20e) in der Nährstoffverteilung (18a, 18b) zumindest des ersten Nährstoffs der Düngermischung (14) entsprechend des ausgeführten ersten Ausbringvorgangs (10) den folgenden Schritt umfasst:
- Ausführen einer spektralen Analyse des Pflanzenbestands vor oder während dem Planen und/oder Ausführen des zweiten Ausbringvorgangs (12).

5. Verfahren nach einem der vorstehenden Ansprüche,
**dadurch gekennzeichnet, dass** das Erfassen von Ungleichmäßigkeiten (20a-20e) in der Nährstoffverteilung (18a, 18b) zumindest des ersten Nährstoffs der Düngermischung (14) entsprechend des geplanten und/oder ausgeführten ersten Ausbringvorgangs (10) zumindest einen der folgenden Schritte umfasst:
- Bereitstellen von Streuparametern einer Verteilmaschine, welche den Düngerauswurf beeinflussen, für eine Auswerteeinrichtung;
- Bereitstellen von Wurf- und/oder Flugeigenschaften der Düngermischung (14) für eine Auswerteeinrichtung;
- Bereitstellen von Wurf- und/oder Flugeigenschaften der ersten Düngersorte (16a) und der zweiten Düngersorte (16b) für eine Auswerteeinrichtung.

6. Verfahren nach Anspruch 5,
**dadurch gekennzeichnet, dass** das Erfassen von Ungleichmäßigkeiten (20a-20e) in der Nährstoffverteilung (18a, 18b) zumindest des ersten Nährstoffs der Düngermischung (14) entsprechend des geplanten und/oder ausgeführten ersten Ausbringvorgangs (10) den folgenden Schritt umfasst:
- Berechnen der Ungleichmäßigkeiten (20a-20e) in der Nährstoffverteilung (18a, 18b) zumindest des ersten Nährstoffs der Düngermischung (14) unter Berücksichtigung der bereitgestellten Streuparameter, der bereitgestellten Wurf- und/oder Flugeigenschaften der Düngermischung (14) und/oder der bereitgestellten Wurf- und/oder Flugeigenschaften der ersten Düngersorte (16a) und der zweiten Düngersorte (16b) durch die Auswerteeinrichtung.

7. Verfahren nach einem der vorstehenden Ansprüche,
**dadurch gekennzeichnet, dass** das Planen und/oder Ausführen des zweiten Ausbringvorgangs (12) zumindest einen der folgenden Schritte umfasst:
- Anzeigen der Nährstoffverteilung (18a, 18b) zumindest des ersten Nährstoffs der Düngermischung (14) entsprechend des geplanten und/oder ausgeführten ersten Ausbringvorgangs (10);
- Anzeigen eines Fahrgassenvorschlags für den zweiten Ausbringvorgang (12);
- Anzeigen eines Einstellungsvorschlags für die Streuparameter einer Verteilmaschine (100) für den zweiten Ausbringvorgang (12).

8. Verfahren nach einem der vorstehenden Ansprüche,
**dadurch gekennzeichnet, dass** das Ausführen des zweiten Ausbringvorgangs (12) zumindest einen der folgenden Schritte umfasst:
- Erzeugen eines Steuerungssignals zur Anpassung von Streuparametern einer Verteilmaschine (100) auf Grundlage der erfassten Ungleichmäßigkeiten (20a-20e) in der Nährstoffverteilung (18a, 18b);
- selbsttätiges Anpassen von Streuparametern der Verteilmaschine (100) auf Grundlage des erzeugten Steuerungssignals;
- selbsttätiges Steuern der Verteilmaschine (100) oder einer die Verteilmaschine (100) tragenden oder ziehenden Maschine zur Einhaltung einer zum Reduzieren der erfassten Ungleichmäßigkeiten (20a-20e) geeigneten Fahrgasse (22a-22e, 26a-26d).

9. Verfahren nach Anspruch 8,
**dadurch gekennzeichnet, dass** das Anpassen von Streuparametern der Verteilmaschine (100) zumindest einen der folgenden Schritte umfasst:
- Einstellen einer geeigneten Rotationsgeschwindigkeit einer Wurfscheibe zum Reduzieren der erfassten Ungleichmäßigkeiten (20a-20e) in der Nährstoffverteilung (18a, 18b);
- Einstellen einer geeigneten Anordnung und/oder Ausrichtung von einer oder mehreren an einer Wurfscheibe angeordneten Wurfschaufeln zum Reduzieren der erfassten Ungleichmäßigkeiten (20a-20e) in der Nährstoffverteilung (18a, 18b);
- Einstellen eines geeigneten Aufgabepunkts des Ausgleichdüngers auf eine Wurfscheibe zum Reduzieren der erfassten Ungleichmäßigkeiten (20a-20e) in der Nährstoffverteilung (18a, 18b);
- Einstellen einer geeigneten Menge an Ausgleichsdünger (24) zum Reduzieren der erfassten Ungleichmäßigkeiten (20a-20e) in der Nährstoffverteilung (18a, 18b).

10. Verfahren nach einem der vorstehenden Ansprüche,
**dadurch gekennzeichnet, dass** beim Ausführen des ersten Ausbringvorgangs (10) bereits berücksichtigt wird, dass der zweite Ausbringvorgang (12) zum Reduzieren von Ungleichmäßigkeiten (20a-20e) in der Nährstoffverteilung (18a, 18b) notwendig sein wird.

11. Landwirtschaftliche Verteilmaschine (100), mit
- einer Verteileinrichtung zum Ausbringen von Dünger; und
- einer Auswerteeinrichtung, welche dazu eingerichtet ist, Ungleichmäßigkeiten (20a-20e) in der Nährstoffverteilung (18a, 18b) zumindest eines ersten Nährstoffs einer Düngermischung (14) entsprechend eines geplanten und/oder ausgeführten ersten Ausbringvorgangs (10) zur Ausbringung der Düngermischung (14) zu erfassen; **dadurch gekennzeichnet, dass** die landwirtschaftliche Verteilmaschine (100) dazu eingerichtet ist, das Verfahren zum Planen und/oder Ausführen eines Düngungsvorgangs nach einem der vorstehenden Ansprüche auszuführen; und eine Ausgabevorrichtung dazu eingerichtet ist, einen Einstellungsvorschlag für die Streuparameter für den zweiten Ausbringvorgang auszugeben, insbesondere anzuzeigen.

12. Landwirtschaftliche Verteilmaschine (100) nach Anspruch 11,
**dadurch gekennzeichnet, dass** die Ausgabevorrichtung dazu eingerichtet ist,
- die Nährstoffverteilung (18a, 18b) zumindest des ersten Nährstoffs der Düngermischung (14) entsprechend des geplanten und/oder ausgeführten ersten Ausbringvorgangs (10) auszugeben, insbesondere anzuzeigen, und/oder
- einen Fahrgassenvorschlag für den zweiten Ausbringvorgang (12) auszugeben, insbesondere anzuzeigen.

13. Landwirtschaftliche Verteilmaschine (100) nach Anspruch 11 oder 12,
**dadurch gekennzeichnet, dass** die Auswerteeinrichtung dazu eingerichtet ist, ein Steuerungssignal zur Anpassung von Streuparametern der landwirtschaftlichen Verteilmaschine (100) auf Grundlage der erfassten Ungleichmäßigkeiten (20a-20e) in der Nährstoffverteilung (18a, 18b) zumindest des ersten Nährstoffs der Düngermischung (14) zu erzeugen.

14. Landwirtschaftliche Verteilmaschine (100) nach einem der Ansprüche 11 bis 13,
**gekennzeichnet durch** eine Steuerungseinrichtung, welche dazu eingerichtet ist,
- Streuparameter der landwirtschaftlichen Verteilmaschine (100) auf Grundlage des erzeugten Steuerungssignals selbsttätig anzupassen; und/oder
- die Verteilmaschine (100) oder eine die Verteilmaschine (100) ziehende oder tragende Maschine zur Einhaltung einer zum Reduzieren der erfassten Ungleichmäßigkeiten (20a-20e) in der Nährstoffverteilung (18a, 18b) geeigneten Fahrgasse (22a-22e, 26a-26d) selbsttätig zu steuern.

## Claims

1. Method for planning and/or executing a fertilizing procedure, with the steps of:
- planning and/or executing a first spreading procedure (10) for spreading a fertilizer mixture (14) having a first type of fertilizer (16a) and a second type of fertilizer (16b), wherein the fertilizer mixture (14) comprises at least two nutrients; and
- detecting irregularities (20a-20e) in the nutrient distribution (18a, 18b) at least of a first nutrient of the fertilizer mixture (14) in accordance with the planned and/or executed first spreading procedure (10) by means of an evaluation device;
**characterized by** the step of:
- planning and/or executing a second spreading procedure (12) for spreading a compensating fertilizer (24) in order to reduce the detected irregularities (20a-20e) in the nutrient distribution (18a, 18b), wherein the compensating fertilizer (24) comprises at least the first nutrient and corresponds neither to the first type of fertilizer (16a) nor to the second type of fertilizer (16b) of the fertilizer mixture (14).

2. Method according to Claim 1,
**characterized in that** the planning and/or execution of the first spreading procedure (10) comprises at least one of the following steps:
- inputting or selecting a fertilizer mixture (14) into/at an agricultural distributing machine, a tractor or carrier machine of the agricultural distributing machine or by an external implement;
- inputting or selecting the first type of fertilizer (16a) and the second type of fertilizer (16b) of the fertilizer mixture (14) into/at an agricultural distributing machine, a tractor or carrier machine of the agricultural distributing machine or by an external implement.

3. Method according to Claim 1 or 2,
**characterized in that** the detection of irregularities (20a-20e) in the nutrient distribution (18a, 18b) at least of the first nutrient of the fertilizer mixture (14) in accordance with the planned and/or executed first spreading procedure (10) comprises at least one of the following steps:
- arranging one or more collecting containers on a test area;
- carrying out test spreading of the fertilizer mixture (14) over the test area;
- evaluating the content of the one or more collecting containers after the test spreading has been carried out.

4. Method according to one of the preceding claims, **characterized in that** the detection of irregularities (20a-20e) in the nutrient distribution (18a, 18b) at least of the first nutrient of the fertilizer mixture (14) in accordance with the executed first spreading procedure (10) comprises the following step:
- carrying out a spectral analysis of the crop before or during the planning and/or executing of the second spreading procedure (12).

5. Method according to one of the preceding claims, **characterized in that** the detection of irregularities (20a-20e) in the nutrient distribution (18a, 18b) at least of the first nutrient of the fertilizer mixture (14) in accordance with the planned and/or executed first spreading procedure (10) comprises at least one of the following steps:
- providing scattering parameters of a distributing machine, which scattering parameters influence the ejection of fertilizer, for an evaluation device;
- providing ejection and/or flying properties of the fertilizer mixture (14) for an evaluation device;
- providing ejection and/or flying properties of the first type of fertilizer (16a) and the second type of fertilizer (16b) for an evaluation device.

6. Method according to Claim 5, **characterized in that** the detection of irregularities (20a-20e) in the nutrient distribution (18a, 18b) at least of the first nutrient of the fertilizer mixture (14) in accordance with the planned and/or executed first spreading operation (10) comprises the following step:
- calculating the irregularities (20a-20e) in the nutrient distribution (18a, 18b) at least of the first nutrient of the fertilizer mixture (14) taking into consideration the provided scattering parameters, the provided ejection and/or flying properties of the fertilizer mixture (14) and/or the provided ejection and/or flying properties of the first type of fertilizer (16a) and of the second type of fertilizer (16b) by means of the evaluation device.

7. Method according to one of the preceding claims, **characterized in that** the planning and/or executing of the second spreading procedure (12) comprises at least one of the following steps:
- displaying the nutrient distribution (18a, 18b) at least of the first nutrient of the fertilizer mixture (14) in accordance with the planned and/or executed first spreading procedure (10);
- displaying a tramline proposal for the second spreading procedure (12);
- displaying an adjustment proposal for the scattering parameters of a distributing machine (100) for the second spreading procedure (12).

8. Method according to one of the preceding claims, **characterized in that** the execution of the second spreading procedure (12) comprises at least one of the following steps:
- generating a control signal for adapting scattering parameters of a distributing machine (100) on the basis of the detected regularities (20a-20e) in the nutrient distribution (18a, 18b) ;
- automatically adapting scattering parameters of the distributing machine (100) on the basis of the generated control signal;
- automatically controlling of the distributing machine (100) or of a machine carrying or pulling the distributing machine (100) in order to adhere to a tramline (22a-22e, 26a-26d) suitable for reducing the detected irregularities (20a-20e).

9. Method according to Claim 8,
**characterized in that** the adaptation of scattering parameters of the distributing machine (100) comprises at least one of the following steps:
- adjusting a suitable rotational speed of an ejection disc for reducing the detected irregularities (20a-20e) in the nutrient distribution (18a, 18b);
- adjusting a suitable arrangement and/or orientation of one or more ejection blades arranged on an ejection disc in order to reduce the detected irregularities (20a-20e) in the nutrient distribution (18a, 18b);
- adjusting a suitable feeding point of the compensating fertilizer onto an ejection disc in order to reduce the detected irregularities (20a-20e) in the nutrient distribution (18a, 18b) ;
- adjusting a suitable quantity of compensating fertilizer (24) in order to reduce the detected irregularities (20a-20e) in the nutrient distribution (18a, 18b).

10. Method according to one of the preceding claims, **characterized in that**, for the executing of the first spreading procedure (10), it is already taken into consideration that the second spreading procedure (12) will be necessary in order to reduce irregularities (20a-20e) in the nutrient distribution (18a, 18b).

11. Agricultural distributing machine (100), with
- a distributing device for spreading fertilizer; and
- an evaluation device, which is configured to detect irregularities (20a-20e) in the nutrient distribution (18a, 18b) at least of a first nutrient of a fertilizer mixture (14) in accordance with a planned and/or executed first spreading procedure (10) for spreading the fertilizer mixture (14);
**characterized in that**
the agricultural distributing machine (100) is configured to carry out the method for planning and/or executing a fertilizing procedure according to one of the preceding claims;
and an output device is configured to output, in particular to display, an adjustment proposal for the scattering parameters for the second spreading operation.

12. Agricultural distributing machine (100) according to Claim 11,
**characterized in that** the output device is configured
- to output, in particular to display, the nutrient distribution (18a, 18b) at least of the first nutrient of the fertilizer mixture (14) in accordance with the planned and/or executed first spreading procedure (10), and/or
- to output, in particular to display, a tramline proposal for the second spreading procedure (12) .

13. Agricultural distributing machine (100) according to Claim 11 or 12,
**characterized in that** the evaluation device is configured to generate a control signal for adapting scattering parameters of the agricultural distributing machine (100) on the basis of the detected irregularities (20a-20e) in the nutrient distribution (18a, 18b) at least of the first nutrient of the fertilizer mixture (14).

14. Agricultural distributing machine (100) according to one of Claims 11 to 13,
**characterized by** a control device, which is configured
- to automatically adapt scattering parameters of the agricultural distributing machine (100) on the basis of the generated control signal; and/or
- automatically to control the distributing machine (100) or a machine pulling or carrying the distributing machine (100) in order to adhere to a tramline (22a-22e, 26a-26d) suitable for reducing the detected irregularities (20a-20e) in the nutrient distribution (18a, 18b).

## Revendications

1. Procédé de planification et/ou de mise en œuvre d'un processus d'apport d'engrais, comprenant les étapes suivantes :
- planification et/ou mise en œuvre d'un premier processus d'épandage (10) pour épandre un mélange d'engrais (14) comprenant un premier type d'engrais (16a) et un second type d'engrais (16b), dans lequel le mélange d'engrais (14) comprend au moins deux nutriments ; et
- détection d'irrégularités (20a-20e) dans la répartition des nutriments (18a, 18b) d'au moins un premier nutriment du mélange d'engrais (14) conformément au premier processus d'épandage (10) planifié et/ou mis en œuvre par un dispositif d'évaluation ;
**caractérisé par** l'étape de :
- planification et/ou mise en œuvre d'un second processus d'épandage (12) pour épandre un engrais de compensation (24) permettant de réduire les irrégularités (20a-20e) détectées dans la répartition des nutriments (18a, 18b), dans lequel l'engrais de compensation (24) comprend au moins le premier nutriment et ne correspond ni au premier type d'engrais (16a) ni au second type d'engrais (16b) du mélange d'engrais (14).

2. Procédé selon la revendication 1,
**caractérisé en ce que** la planification et/ou la mise en œuvre du premier processus d'épandage (10) comprend au moins l'une des étapes suivantes :
- introduction ou sélection d'un mélange d'engrais (14) sur un épandeur agricole, un tracteur ou une machine porteuse de l'épandeur agricole ou d'un outil externe ;
- introduction ou sélection du premier type d'engrais (16a) et du second type d'engrais (16b) du mélange d'engrais (14) sur un épandeur agricole, un tracteur ou une machine porteuse de l'épandeur agricole ou d'un outil externe.

3. Procédé selon la revendication 1 ou 2,
**caractérisé en ce que** la détection d'irrégularités (20a-20e) dans la répartition des nutriments (18a, 18b) d'au moins le premier nutriment du mélange d'engrais (14) conformément au premier processus d'épandage (10) planifié et/ou mis en œuvre comprend au moins l'une des étapes suivantes :
- mise en place d'un ou de plusieurs récipients de collecte sur une surface de test ;
- mise en œuvre d'un épandage de test du mélange d'engrais (14) sur la surface de test ;
- évaluation du contenu d'un ou de plusieurs récipients de collecte après la mise en œuvre de l'épandage de test.

4. Procédé selon l'une des revendications précédentes, **caractérisé en ce que** la détection d'irrégularités (20a-20e) dans la répartition des nutriments (18a, 18b) d'au moins le premier nutriment du mélange d'engrais (14) conformément au premier processus d'épandage (10) mis en œuvre comprend l'étape suivante :
- mise en œuvre d'une analyse spectrale du peuplement végétal avant ou pendant la planification et/ou la mise en œuvre du second processus d'épandage (12).

5. Procédé selon l'une des revendications précédentes, **caractérisé en ce que** la détection d'irrégularités (20a-20e) dans la répartition des nutriments (18a, 18b) d'au moins le premier nutriment du mélange d'engrais (14) conformément au premier processus d'épandage (10) planifié et/ou mis en œuvre, comprend au moins l'une des étapes suivantes :
- fourniture de paramètres d'épandage d'une machine distributrice, qui influencent la projection de l'engrais, à un dispositif d'évaluation ;
- fourniture de propriétés de projection et/ou de vol du mélange d'engrais (14) à un dispositif d'évaluation ;
- fourniture de propriétés de projection et/ou de vol du premier type d'engrais (16a) et du second type d'engrais (16b) à un dispositif d'évaluation.

6. Procédé selon la demande 5,
**caractérisé en ce que** la détection d'irrégularités (20a-20e) dans la répartition des nutriments (18a, 18b) d'au moins le premier nutriment du mélange d'engrais (14) conformément au premier processus d'épandage (10) planifié et/ou mis en œuvre comprend l'étape suivante :
- calcul des irrégularités (20a-20e) dans la répartition des nutriments (18a, 18b) d'au moins le premier nutriment du mélange d'engrais (14) en tenant compte des paramètres d'épandage fournis, des propriétés de projection et/ou de vol du mélange d'engrais (14) fournies et/ou des propriétés de projection et/ou de vol du premier type d'engrais (16a) et du second type d'engrais (16b) fournies par le dispositif d'évaluation.

7. Procédé selon l'une des revendications précédentes, **caractérisé en ce que** la planification et/ou la mise en œuvre du second processus d'épandage (12) comprend au moins l'une des étapes suivantes :
- affichage de la répartition des nutriments (18a, 18b) d'au moins le premier nutriment du mélange d'engrais (14) conformément au premier processus d'épandage planifié et/ou mis en œuvre (10) ;
- affichage d'une proposition de jalonnage pour le second processus d'épandage (12) ;
- affichage d'une proposition de réglage pour les paramètres d'épandage d'une machine distributrice (100) pour le second processus d'épandage (12).

8. Procédé selon l'une des revendications précédentes, **caractérisé en ce que** la mise en œuvre du second épandage (12) comprend au moins l'une des étapes suivantes :
- génération d'un signal de commande permettant de régler des paramètres d'épandage d'une machine distributrice (100) sur la base des irrégularités (20a-20e) détectées dans la répartition des nutriments (18a, 18b) ;
- adaptation automatique de paramètres d'épandage de la machine distributrice (100) sur la base du signal de commande généré ;
- commande automatique de la machine distributrice (100) ou d'une machine portant ou tractant la machine distributrice (100) afin de maintenir un jalonnage (22a-22e, 26a-26d) apte à réduire les irrégularités (20a-20e) détectées.

9. Procédé selon la revendication 8,
**caractérisé en ce que** l'adaptation de paramètres d'épandage de la machine distributrice (100) comprend au moins l'une des étapes suivantes :
- réglage d'une vitesse de rotation appropriée d'un disque de projection afin de réduire les irrégularités (20a-20e) détectées dans la répartition des nutriments (18a, 18b) ;
- réglage d'un agencement et/ou d'une orientation approprié d'une ou de plusieurs pales de projection disposées sur un disque de projection afin de réduire les irrégularités (20a-20e) détectées dans la répartition des nutriments (18a, 18b) ;
- réglage d'un point d'application approprié de l'engrais de compensation sur un disque de projection afin de réduire les irrégularités (20a-20e) détectées dans la répartition des nutriments (18a, 18b) ;
- réglage d'une quantité appropriée d'engrais de compensation (24) afin de réduire les irrégularités (20a-20e) détectées dans la répartition des nutriments (18a, 18b).

10. Procédé selon l'une des revendications précédentes, **caractérisé en ce que**, lors de la mise en œuvre du premier processus d'épandage (10), il est déjà pris en compte que le second processus d'épandage (12) sera nécessaire pour réduire les irrégularités (20a-20e) dans la répartition des nutriments (18a, 18b).

11. Machine distributrice agricole (100), comprenant
- un dispositif de distribution pour l'épandage d'engrais ; et
- un dispositif d'évaluation qui est conçu pour détecter des irrégularités (20a-20e) dans la répartition (18a, 18b) d'au moins un premier nutriment d'un mélange d'engrais (14) conformément à un premier processus d'épandage (10) planifié et/ou mis en œuvre pour l'épandage du mélange d'engrais (14) ; **caractérisée en ce que**
la machine distributrice agricole (100) est conçue pour mettre en œuvre le procédé de planification et/ou de mise en œuvre d'un processus d'apport d'engrais selon l'une des revendications précédentes ; et
**en ce qu'**il est prévu un dispositif de sortie pour fournir en sortie, notamment pour afficher, une proposition de réglage des paramètres d'épandage pour le second processus d'épandage.

12. Machine distributrice agricole (100) selon la revendication 11,
**caractérisée en ce que** le dispositif de sortie est conçu
- pour fournir en sortie, notamment pour afficher, la répartition des nutriments (18a, 18b) d'au moins le premier nutriment du mélange d'engrais (14) conformément au premier processus d'épandage planifié et/ou mis en œuvre (10), et/ou
- pour fournir en sortie, notamment pour afficher, une proposition de jalonnage pour le second processus d'épandage (12).

13. Machine distributrice agricole (100) selon la revendication 11 ou 12,
**caractérisée en ce que** le dispositif d'évaluation est conçu pour générer un signal de commande permettant d'adapter des paramètres d'épandage de la machine distributrice agricole (100) sur la base des irrégularités (20a-20e) détectées dans la répartition des nutriments (18a, 18b) d'au moins le premier nutriment du mélange d'engrais (14).

14. Machine distributrice agricole (100) selon l'une des revendications 11 à 13,
**caractérisée par** un dispositif de commande qui est conçu
- pour adapter automatiquement des paramètres d'épandage de la machine distributrice agricole (100) sur la base du signal de commande généré ; et/ou
- pour commander automatiquement la machine distributrice (100) ou une machine tractant ou portant la machine distributrice (100) afin de maintenir un jalonnage (22a-22e, 26a-26d) apte à réduire les irrégularités (20a-20e) détectées dans la répartition des nutriments (18a, 18b).
